# FASCICULE DE BREVET EUROPEEN

(11) **EP 3 729 270 B1**
(45) Date de publication et mention de la délivrance du brevet: **18.08.2021**
(21) Numéro de dépôt: 18825967.5
(22) Date de dépôt: 17.12.2018
(51) Int. Cl.: G06F 11/07, H04L 9/32, H04L 29/06

(54) **PROCÉDÉ DE CONTRÔLE DU FONCTIONNEMENT D'UN COMPOSANT ÉLECTRONIQUE COMPLEXE**
VERFAHREN ZUR STEUERUNG DES BETRIEBS EINER KOMPLEXEN ELEKTRONISCHEN KOMPONENTE
METHOD FOR CONTROLLING THE OPERATION OF A COMPLEX ELECTRONIC COMPONENT

(30) Priorité: 21.12.2017 FR 1762799
(43) Date de publication de la demande: 28.10.2020
(73) Titulaire: SAFRAN ELECTRONICS & DEFENSE, 75015 Paris (FR)
(72) Inventeur: GUILLOT, François, 92100 Boulogne-Billancourt (FR); COURTEILLE, Jean-Marie, 92100 Boulogne-Billancourt (FR)
(74) Mandataire: Cabinet Le Guen Maillet
(86) Numéro de dépôt international: PCT/EP2018/085167
(87) Numéro de publication internationale: WO 2019/121492

(56) Documents cités:
- EP-A1- 3 240 256
- WO-A1-2010/105249
- WO-A1-2012/050933

## Description

La présente invention concerne un procédé et un système de contrôle du fonctionnement d'un composant électronique complexe transférant des trames de données vers des ports physiques.

Classiquement, les composants utilisés dans le domaine de l'avionique sont qualifiés pour répondre à des normes de sécurité.

La norme DO-254 est l'une de ces normes. Elle est utilisée lors de la conception de matériel électronique complexe dans les systèmes aériens. Le matériel électronique complexe comprend des dispositifs tels que les tableaux de portes programmables de terrain (FPGA), les dispositifs logiques programmables (PLD) et les circuits intégrés spécifiques à l'application (ASIC).

La DO-254 définit les exigences tout au long du processus de conception et de vérification du matériel électronique. Des éléments de preuves, tels que par exemple le plan de vérification matérielle, des schémas, doivent être fournis aux autorités compétentes.

Pour répondre aux divers besoins de communication dans un aéronef, les composants électroniques utilisés dans l'avionique sont de plus en plus complexes.

Des composants électroniques complexes sont disponibles sur le marché. Par exemple, il existe des processeurs de communication qui combinent plusieurs noyaux de processeurs 64 bits avec une logique d'accélération du chemin de données haute performance et des interfaces de bus périphérique réseau requises pour le routage et les télécommunications. Ces composants sont par exemple utilisés dans des applications telles que les routeurs, les commutateurs, les périphériques d'accès Internet, les pare-feu et d'autres applications.

Ces composants électroniques complexes n'ont pas été conçus selon les normes et les exigences de l'avionique et fournissent pourtant des fonctionnalités qui seraient intéressantes dans le domaine de l'avionique.

Par exemple, il existe dans un aéronef des réseaux de communications qui coexistent. Ces réseaux de communication permettent les échanges de données vitales au fonctionnement de l'aéronef, permettent des échanges de messages entre le cockpit et le personnel de cabine et permettent aux passagers d'accéder à des données ou de communiquer avec des tiers.

Les différents réseaux doivent être protégés et isolés de manière à éviter toute intrusion d'un tiers dans un réseau auquel il n'est pas autorisé à accéder.

Un passager mal intentionné, relié à un réseau de communication, dit non sécurisé, ouvert aux passagers, pourrait par exemple tenter d'accéder, par des opérations frauduleuses, au réseau de communication, dit sécurisé, permettant les échanges de données vitales au fonctionnement de l'aéronef pour en perturber le fonctionnement.

Les composants électroniques complexes restent parfois bloqués à une étape particulière du traitement qu'ils effectuent. Ce type de problème peut devenir très problématique lors de l'utilisation de ceux-ci dans des systèmes qui sont embarqués dans un aéronef.

Les composants électroniques complexes du marché ne peuvent pas être utilisés en tant que tels dans un aéronef car ils ne peuvent garantir le meilleur niveau de fiabilité, ainsi par exemple pour éviter que des données soient transférées vers une mauvaise destination.

La présente invention a pour but de résoudre les inconvénients de l'art antérieur en proposant un procédé et un système de contrôle du fonctionnement d'un composant électronique complexe transférant des trames de données vers des ports physiques qui garantissent que les données soient toujours transférées vers la bonne destination et qui permettent de garantir qu'un composant électronique complexe ne reste pas bloqué à une étape particulière du traitement qu'il effectue.

A cette fin, selon un premier aspect, l'invention propose un procédé de contrôle du fonctionnement d'un composant électronique complexe transférant des trames de données vers des ports physiques, chaque trame de données comportant au moins une adresse source, caractérisé en ce que le procédé comporte les étapes de :
- insertion, par un module logiciel compris dans le composant électronique complexe, dans chaque trame de données à transférer par le composant électronique complexe, d'une première signature déterminée au moins à partir de l'adresse source comprise dans la trame de données et d'un identifiant du port physique par lequel la trame de données est transférée par le composant électronique complexe,
- transfert, par le composant électronique complexe, de la trame de données dans laquelle la signature a été insérée,
- réception, par un dispositif de sécurisation du routage associé au port physique, de la trame de données dans laquelle la signature a été insérée,
- détermination, par le dispositif de sécurisation du routage associé au port physique, à partir de l'identifiant du port physique et de l'adresse source, d'une seconde signature,
- comparaison, par le dispositif de sécurisation du routage associé au port physique, des signatures,
- exécution, par le dispositif de sécurisation du routage associé au port physique, d'une première opération si les première et seconde signatures sont différentes ou d'une seconde opération si les première et seconde signatures sont identiques.

L'invention concerne aussi un système de contrôle du fonctionnement d'un composant électronique complexe transférant des trames de données vers des ports physiques, chaque trame de données comportant au moins une adresse source, caractérisé en ce que le système comporte :
- des moyens d'insertion, par un module logiciel compris dans le composant électronique complexe, dans chaque trame de données à transférer par le composant électronique complexe, d'une première signature déterminée au moins à partir de l'adresse source comprise dans la trame de données et d'un identifiant du port physique par lequel la trame de données est transférée par le composant électronique complexe,
- des moyens de transfert, compris dans le composant électronique complexe, de la trame de données dans laquelle la signature a été insérée,
- des moyens de réception, par un dispositif de sécurisation du routage associé au port physique, de la trame de données dans laquelle la signature a été insérée,
- des moyens de détermination, compris dans le dispositif de sécurisation du routage associé au port physique, à partir de l'identifiant du port physique et de l'adresse source, d'une seconde signature,
- des moyens de comparaison, compris dans le dispositif de sécurisation du routage associé au port physique, des signatures,
- des moyens d'exécution, compris dans le dispositif de sécurisation du routage associé au port physique, d'une première opération si les première et seconde signatures sont différentes ou d'une seconde opération si les première et seconde signatures sont identiques.

Ainsi, la présente invention garantit qu'un composant électronique complexe transférant des trames de données vers des ports physiques fonctionne correctement.

Grâce à l'ajout du module logiciel compris dans le composant électronique complexe et du dispositif de sécurisation du routage associé au port physique, il est possible d'éviter qu'une trame de données passe par un port vers lequel la trame de données ne devait pas aller. Il est alors possible d'utiliser des composants électroniques complexes commercialisés à d'autres fins que l'aéronautique et de garantir qu'un composant électronique complexe peut fonctionner avec le niveau de qualité exigé par l'industrie aéronautique.

Selon un mode particulier de l'invention, la première opération est une suppression de la trame de données reçue par le dispositif de sécurisation du routage associé au port physique et la seconde opération est une suppression de la première signature dans la trame de données pour un transfert, par le dispositif de sécurisation du routage associé au port physique, de la trame de données vers une adresse de destination comprise dans la trame de données.

Ainsi, la présente invention garantit que les données sont toujours transférées vers la bonne destination.

Selon un mode particulier de l'invention, le procédé comporte en outre une étape de comptage des trames de données supprimées.

Ainsi, il est possible d'avoir un retour d'expérience sur la fiabilité du composant électronique complexe, voire de réinitialiser le composant électronique complexe, lorsque le nombre de trames de données supprimées dépasse un seuil prédéterminé.

Selon un mode particulier de l'invention, les signatures sont en outre déterminées à partir de l'adresse de destination.

Selon un mode particulier de l'invention, les signatures sont en outre déterminées à partir de tout ou partie des données comprises dans la trame de données.

Selon un mode particulier de l'invention, les signatures sont en outre déterminées à partir de la quantité de données comprises dans la trame de données.

Selon un mode particulier de l'invention, les signatures sont obtenues à partir d'une fonction de type ou exclusif ou d'une fonction de hachage à partir d'une clef de codage partagée uniquement entre le module logiciel et chaque dispositif de sécurisation du routage.

Ainsi, la détermination de la signature est simple, rapide et ne pénalise pas la rapidité du transfert de trames de données.

Selon un mode particulier de l'invention, les trames de données sont des trames de service prédéterminées transférées périodiquement et la première opération est au moins un non traitement de la trame de service et une suppression de la trame de service reçue par le dispositif de sécurisation du routage associé au port et une réinitialisation du composant électronique complexe si un nombre prédéterminé de trames de service n'est pas reçu pendant une durée prédéterminée et la seconde opération est un traitement de la trame de service et une suppression de la trame de service reçue par le dispositif de sécurisation du routage associé au port.

Ainsi la présente invention s'assure que le composant électronique complexe ne reste pas bloqué à une étape particulière du traitement qu'il effectue en introduisant une fonction de chien de garde. Grâce à cette fonctionnalité, il est possible de détecter un blocage du composant électronique complexe et de redémarrer le système si la somme du nombre de trames de service prédéterminées non reçues dans un délai imparti et du nombre de trames de services pour lesquelles la comparaison de signatures est négative dans le délai imparti par le dispositif de sécurisation du routage associé au port physique.

Selon un mode particulier de l'invention, le composant électronique complexe et chaque dispositif de sécurisation du routage associé à un port physique sont compris dans un aéronef.

Selon un mode particulier de l'invention, l'aéronef comporte différentes zones sécurisées.

L'invention concerne aussi les programmes d'ordinateur stockés sur un support d'informations, lesdits programmes comportant des instructions permettant de mettre en œuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un exemple d'un système de contrôle du fonctionnement d'un composant électronique complexe transférant des trames de données vers des ports physiques dans un aéronef comportant une zone sécurisée et une zone non sécurisée ;
la Fig. 2 représente un exemple d'un procédé d'insertion, par un module logiciel compris dans le composant électronique complexe, dans chaque trame de données à transférer par le composant électronique complexe, d'une première signature ;
la Fig. 3 représente un exemple d'un procédé de traitement, par un dispositif de sécurisation du routage associé à un port physique, d'une trame de données dans laquelle une signature a été insérée.

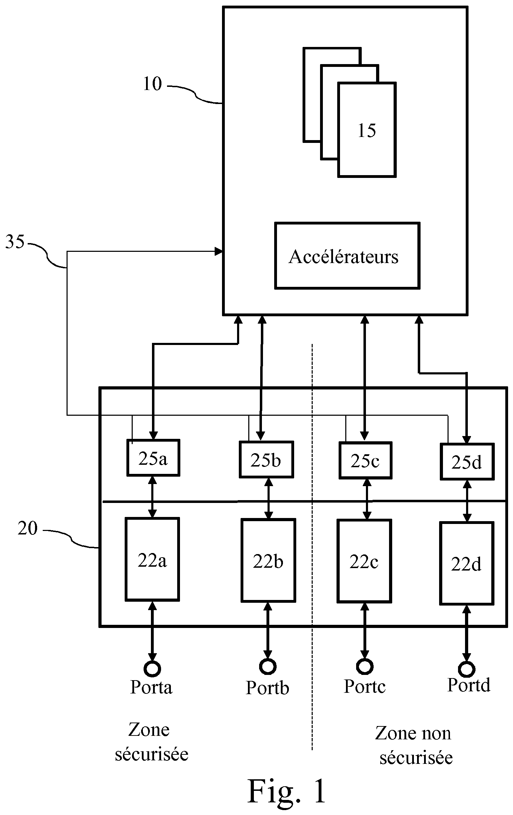

La **Fig. 1** représente un exemple d'un système de contrôle du fonctionnement d'un composant électronique complexe transférant des trames de données vers des ports physiques dans un aéronef comportant une zone sécurisée et une zone non sécurisée.

Le système comporte un composant électronique complexe 10. Le composant électronique complexe 10 est par exemple un processeur de communication qui combine plusieurs noyaux de processeurs 64 bits avec une logique d'accélération du chemin de données haute performance et des interfaces de bus périphérique réseau requises pour le routage et les télécommunications.

Selon la présente invention, le composant électronique complexe 10 comporte en outre un module logiciel 15 qui insère, dans chaque trame de données à transférer par le composant électronique complexe 10, une première signature déterminée au moins à partir de l'adresse source comprise dans la trame de données et d'un identifiant du port physique par lequel la trame de données sera transférée par le composant électronique complexe.

Le composant électronique complexe 10 sans le module logiciel 15 n'est pas un composant sécurisé. Le système comporte un composant sécurisé 20.

Un composant non sécurisé est un dispositif pour lequel il n'est pas possible de garantir que toutes les fonctions du dispositif sont effectuées de manière certaine et/ou il n'est pas possible de prouver que le composant exécute toutes ses fonctions de manière certaine.

Un composant sécurisé est un dispositif pour lequel il est possible de garantir que toutes les fonctions du composant sont effectuées de manière certaine et/ou il est possible de prouver que le composant exécute toutes ses fonctions de manière certaine ou qu'une éventuelle défaillance provoque un comportement maitrisé et préalablement anticipé.

Dans l'exemple de la Fig. 1, les ports porta et portb sont des ports d'une zone sécurisée d'un aéronef et les ports porte et portd sont des ports d'une zone non sécurisée de l'aéronef. Bien entendu, l'aéronef peut comprendre un nombre supérieur de zones sécurisées.

De plus, la présente invention garantit que toute erreur de routage entre deux différentes zones de sécurité est traitée ainsi que toute erreur de routage entre deux ports d'une même zone de sécurité est traitée.

Le composant sécurisé 20 comporte une pluralité d'interfaces physiques notées 22a à 22d et de ports physiques bidirectionnels notés Porta à Portd.

Le composant sécurisé 20 comporte selon la présente invention, un dispositif de sécurisation du routage 25a à 25d associé à chaque port Porta à Portd.

Chaque dispositif de sécurisation du routage 25a à 25d détermine à partir de l'identifiant du port physique et de l'adresse source, une seconde signature, compare les première et seconde signatures et exécute une première opération si les première et seconde signatures sont différentes ou une seconde opération si les première et seconde signatures sont identiques.

Par exemple, la première opération est une suppression de la trame de données reçue par le dispositif de sécurisation du routage associé au port physique et la seconde opération est une suppression de la première signature dans la trame de données pour un transfert, de la trame de données vers une adresse de destination comprise dans la trame de données.

Par exemple, les trames de données sont des trames de service prédéterminées transférées périodiquement. Selon cet exemple, il est possible d'assurer une fonction de chien de garde, en anglais « Watchdog », à travers toute la chaîne de routage et d'accélération du composant électronique complexe 10. A cette fin, des trames de services sont élaborées périodiquement par le module logiciel 15. Si le dispositif de sécurisation du routage 25 n'en reçoit aucune avec une signature correcte pendant une unité de temps prédéterminée, alors le dispositif de sécurisation du routage 25 effectue une réinitialisation du composant électronique complexe 10 grâce à un signal dédié noté 35 en Fig. 1. Les trames de services sont systématiquement éliminées, que la vérification des signatures soit bonne ou mauvaise, par le dispositif de sécurisation du routage 25 et ne sont donc pas transférées afin de ne pas sortir sur les ports Porta à Portd.

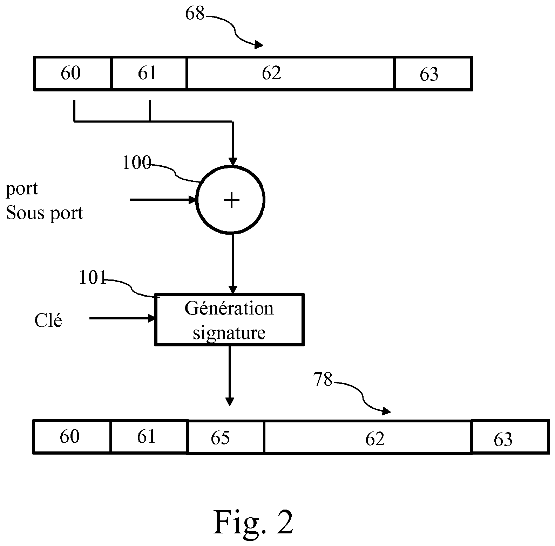

La **Fig. 2** représente un exemple d'un procédé d'insertion, par un module logiciel compris dans le composant électronique complexe, dans chaque trame de données à transférer par le composant électronique complexe, d'une première signature.

Le module logiciel 15 forme une trame de données 68 que le composant électronique complexe 10 doit transmettre.

La trame de données est par exemple élaborée par une application ou est une trame de services prédéterminée qui doit être transmise périodiquement.

Le champ 60 de la trame comprend l'adresse de destination de l'application devant recevoir les données.

Le champ 61 de la trame comprend l'adresse source de l'application transférant les données.

Le champ 62 est le champ comprenant les données.

Le champ 63 est un champ de redondance pour la détection d'éventuelles erreurs.

Le module logiciel 15 à l'étape 100 obtient l'adresse source de l'application envoyant les données dans le champ 61, voire l'adresse de destination, ainsi que le port ou sous port physique vers lequel les données doivent être transférées.

Le module logiciel 15 génère à l'étape 101 une signature au moins à partir de l'adresse source et de l'identifiant du port ou sous port physique obtenu.

En variante, le module logiciel 15 génère une signature à partir de l'adresse source, du port ou sous port physique, de l'adresse destination, des données et/ou de la quantité de données.

La signature est simple et rapide à calculer. La signature est par exemple une fonction de type ou exclusif, une fonction de hachage à partir d'une clef de codage partagée entre le module logiciel 15 et le dispositif de sécurisation du routage 25 mais que le composant électronique complexe 10 ne sera pas en mesure d'élaborer lui-même suite à un fonctionnement ou dysfonctionnement quelconque d'un ou plusieurs de ses constituants.

Le module logiciel 15 forme une trame de données 78 comprenant la signature. Les champs 60 à 63 sont identiques aux champs de la trame de données 68.

Le champ 65 comporte la signature générée à l'étape 101.

La trame de données est alors transférée par le composant électronique complexe 10 vers le port ou sous port physique vers lequel les données doivent être transférées.

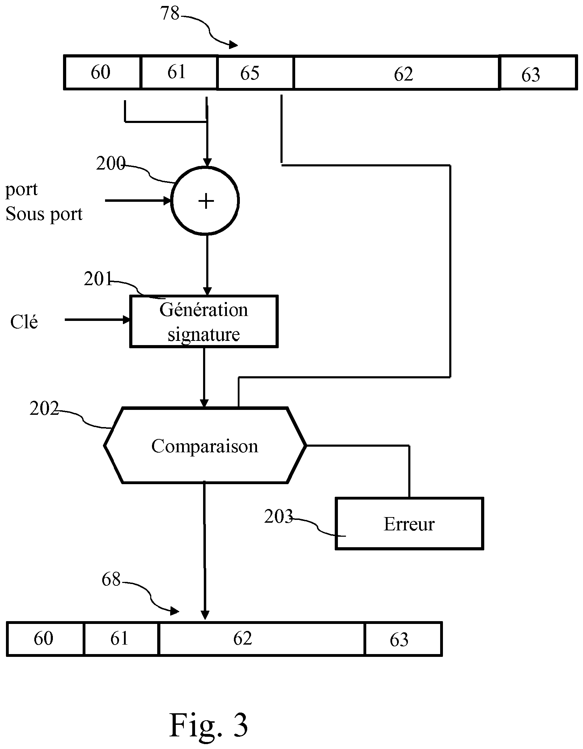

La **Fig. 3** représente un exemple d'un procédé de traitement, par un dispositif de sécurisation du routage 25a à 25d associé à un port physique, d'une trame de données dans laquelle une signature a été insérée.

Un dispositif de sécurisation du routage 25 reçoit une trame 78 du composant électronique complexe 10.

La trame de données est par exemple reçue d'une application ou est une trame de données prédéterminée qui doit être reçue périodiquement.

Le dispositif de sécurisation du routage 25 associé au port physique obtient à l'étape 200, l'adresse source de l'application envoyant les données dans le champ 61, voire l'adresse de destination, ainsi que le port physique par lequel la trame de données est reçue.

Le dispositif de sécurisation du routage 25 associé au port physique génère à l'étape 201 une signature au moins à partir de l'adresse source et de l'identifiant du port ou du sous port physique obtenu.

Le dispositif de sécurisation du routage 25 associé au port physique compare à l'étape 202 la signature comprise dans le champ 65 de la trame de données avec la signature obtenue à l'étape 201.

Le dispositif de sécurisation du routage 25 associé au port physique effectue à l'étape 203 une première opération si les première et seconde signatures sont différentes.

La première opération est une suppression de la trame de données reçue par le dispositif de sécurisation du routage 25 associé au port physique si la trame de données est une trame de données envoyée par une application.

La présente invention assure une fonction de chien de garde, en anglais « Watchdog », à travers toute la chaîne de routage et d'accélération du composant électronique complexe 10. Si le dispositif de sécurisation du routage 25 ne reçoit aucune trame de service avec une signature correcte pendant une unité de temps prédéterminée, alors le dispositif de sécurisation du routage 25 effectue une réinitialisation du composant électronique complexe 10 grâce à un signal dédié noté 35 en Fig. 1. Les trames de services sont systématiquement éliminées, que la vérification des signatures soit bonne ou mauvaise, par le composant 25 et ne sont donc pas transférées afin de ne pas sortir sur les ports Porta à Portd.

Le dispositif de sécurisation du routage 25 associé au port physique effectue une seconde opération si les première et seconde signatures sont identiques.

La seconde opération est une suppression de la première signature dans la trame de données pour un transfert de la trame de données vers une adresse de destination comprise dans la trame de données si la trame de données est une trame de données envoyée par une application.

La seconde opération est une suppression de la trame de données reçue par le dispositif de sécurisation du routage 25 associé au port physique si la trame reçue est une trame de données prédéterminée.

Bien entendu, la présente invention n'est nullement limitée aux modes de réalisation décrits ici, mais englobe, bien au contraire, toute variante à la portée de l'homme du métier.

Par exemple, la présente invention est décrite dans un mode de réalisation dans lequel les trames de données sont transférées par le composant électronique complexe vers des ports physiques. La présente invention est applicable aussi dans un mode de fonctionnement dans lequel les trames de données sont reçues par le composant électronique complexe des ports physiques.

## Revendications

1. Procédé de contrôle du fonctionnement d'un composant électronique complexe (10) transférant des trames de données vers des ports physiques, chaque trame de données comportant au moins une adresse source, **caractérisé en ce que** le procédé comporte les étapes de :
- insertion, par un module logiciel (15) compris dans le composant électronique complexe, dans chaque trame de données à transférer par le composant électronique complexe, d'une première signature déterminée au moins à partir de l'adresse source comprise dans la trame de données et d'un identifiant du port physique par lequel la trame de données est transférée par le composant électronique complexe,
- transfert, par le composant électronique complexe (10), de la trame de données dans laquelle la signature a été insérée,
- réception, par un dispositif de sécurisation du routage (25a, 25b, 25c, 25d) associé au port physique (porta, Portb, Porte, Portd), de la trame de données dans laquelle la signature a été insérée,
- détermination, par le dispositif de sécurisation du routage (25a, 25b, 25c, 25d) associé au port physique (porta, Portb, Porte, Portd), à partir de l'identifiant du port physique et de l'adresse source, d'une seconde signature,
- comparaison, par le dispositif de sécurisation du routage (25a, 25b, 25c, 25d) associé au port physique (porta, Portb, Porte, Portd), des signatures,
- exécution, par le dispositif de sécurisation du routage (25a, 25b, 25c, 25d) associé au port physique (porta, Portb, Porte, Portd), d'une première opération si les première et seconde signatures sont différentes ou d'une seconde opération si les première et seconde signatures sont identiques.

2. Procédé selon la revendication 1, **caractérisé en ce que**, la première opération est une suppression de la trame de données reçue par le dispositif de sécurisation du routage associé au port physique et la seconde opération est une suppression de la première signature dans la trame de données pour un transfert de la trame de données vers une adresse de destination comprise dans la trame de données.

3. Procédé selon la revendication 2, **caractérisé en ce que** le procédé comporte en outre une étape de comptage des trames de données supprimées.

4. Procédé selon la revendication 2 ou 3, **caractérisé en ce que** les signatures sont en outre déterminées à partir de l'adresse de destination.

5. Procédé selon l'une quelconque des revendications 2 à 4, **caractérisé en ce que** les signatures sont en outre déterminées à partir de tout ou partie des données comprises dans la trame de données.

6. Procédé selon l'une quelconque des revendications 2 à 5, **caractérisé en ce que** les signatures sont en outre déterminées à partir de la quantité de données comprises dans la trame de données.

7. Procédé selon la revendication 1, **caractérisé en ce que** les trames de données sont des trames de service prédéterminées transférées périodiquement et **en ce que** la première opération est au moins un non traitement de la trame de service et une suppression de la trame de service reçue par le dispositif de sécurisation du routage associé au port et une réinitialisation du composant électronique complexe si un nombre prédéterminé de trames n'est pas reçu pendant une durée prédéterminée et la seconde opération est un traitement de la trame de service et une suppression de la trame de service reçue par le dispositif de sécurisation du routage associé au port.

8. Procédé selon l'une quelconque des revendications 1 à 7, **caractérisé en ce que** le composant électronique complexe et chaque dispositif de sécurisation du routage associé à un port physique sont compris dans un aéronef

9. Procédé selon la revendication 8, **caractérisé en ce que** l'aéronef comporte différentes zones sécurisées.

10. Procédé selon l'une quelconque des revendications 1 à 9, **caractérisé en ce que** les signatures sont obtenues à partir d'une fonction de type ou exclusif ou d'une fonction de hachage à partir d'une clef de codage partagée uniquement entre le module logiciel et chaque dispositif de sécurisation du routage.

11. Système de contrôle du fonctionnement d'un composant électronique complexe transférant des trames de données vers des ports physiques, chaque trame de données comportant au moins une adresse source, **caractérisé en ce que** le système comporte :
- des moyens d'insertion, par un module logiciel compris dans le composant électronique complexe, dans chaque trame de données à transférer par le composant électronique complexe, d'une première signature déterminée au moins à partir de l'adresse source comprise dans la trame de données et d'un identifiant du port physique par lequel la trame de données est transférée par le composant électronique complexe,
- des moyens de transfert, compris dans le composant électronique complexe, de la trame de données dans laquelle la signature a été insérée,
- des moyens de réception, par un dispositif de sécurisation du routage associé au port physique, de la trame de données dans laquelle la signature a été insérée,
- des moyens de détermination, compris dans le dispositif de sécurisation du routage associé au port physique, à partir de l'identifiant du port physique et de l'adresse source, d'une seconde signature,
- des moyens de comparaison, compris dans le dispositif de sécurisation du routage associé au port physique, des signatures,
- des moyens d'exécution, compris dans le dispositif de sécurisation du routage associé au port physique, d'une première opération si les première et seconde signatures sont différentes ou d'une seconde opération si les première et seconde signatures sont identiques.

## Patentansprüche

1. Verfahren zur Steuerung des Betriebs einer komplexen elektronischen Komponente (10), die Datenrahmen zu physischen Anschlüssen überträgt, wobei jeder Datenrahmen mindestens eine Quelladresse umfasst, **dadurch gekennzeichnet, dass** das Verfahren die folgenden Schritte umfasst:
- Einfügung einer ersten Signatur, die mindestens anhand der im Datenrahmen enthaltenen Quelladresse und einer Kennung des physischen Anschlusses bestimmt wird, durch den der Datenrahmen durch die komplexe elektronische Komponente übertragen wird, in jeden Datenrahmen, der durch die komplexe elektronische Komponente übertragen werden soll, durch ein in der komplexen elektronischen Komponente enthaltenes Softwaremodul (15),
- Übertragung des Datenrahmens, in den die Signatur eingefügt wurde, durch die komplexe elektronische Komponente (10),
- Empfang des Datenrahmens, in den die Signatur eingefügt wurde, durch eine mit dem physischen Anschluss (porta, Portb, Porte, Portd) verknüpfte Vorrichtung zur Sicherung der Weiterleitung (25a, 25b, 25c, 25d),
- Bestimmung einer zweiten Signatur durch die mit dem physischen Anschluss (porta, Portb, Porte, Portd) verknüpfte Vorrichtung zur Sicherung der Weiterleitung (25a, 25b, 25c, 25d) anhand der Kennung des physischen Anschlusses und der Quelladresse,
- Vergleich der Signaturen durch die mit dem physischen Anschluss (porta, Portb, Porte, Portd) verknüpfte Vorrichtung zur Sicherung der Weiterleitung (25a, 25b, 25c, 25d),
- Ausführung einer ersten Operation, wenn die erste und die zweite Signatur verschieden sind, oder einer zweiten Operation, wenn die erste und die zweite Signatur identisch sind, durch eine mit dem physischen Anschluss (porta, Portb, Porte, Portd) verknüpfte Vorrichtung zur Sicherung der Weiterleitung (25a, 25b, 25c, 25d).

2. Verfahren nach Anspruch 1, **dadurch gekennzeichnet, dass** die erste Operation eine Unterdrückung des Datenrahmens ist, der von der mit dem physischen Anschluss verknüpften Vorrichtung zur Sicherung der Weiterleitung empfangen wird, und die zweite Operation eine Unterdrückung der ersten Signatur im Datenrahmen für eine Übertragung des Datenrahmens zu einer im Datenrahmen umfassten Zieladresse ist.

3. Verfahren nach Anspruch 2, **dadurch gekennzeichnet, dass** das Verfahren außerdem einen Schritt der Zählung der unterdrückten Datenrahmen umfasst.

4. Verfahren nach Anspruch 2 oder 3, **dadurch gekennzeichnet, dass** die Signaturen außerdem anhand der Zieladresse bestimmt werden.

5. Verfahren nach einem der Ansprüche 2 bis 4, **dadurch gekennzeichnet, dass** die Signaturen außerdem anhand aller oder eines Teils der im Datenrahmen umfassten Daten bestimmt werden.

6. Verfahren nach einem der Ansprüche 2 bis 5, **dadurch gekennzeichnet, dass** die Signaturen außerdem anhand der Menge der im Datenrahmen umfassten Daten bestimmt werden.

7. Verfahren nach Anspruch 1, **dadurch gekennzeichnet, dass** die Datenrahmen vorbestimmte Wartungsrahmen sind, die periodisch übertragen werden, und dadurch, dass die erste Operation mindestens eine Nichtbearbeitung des Wartungsrahmens und eine Unterdrückung des Wartungsrahmens, der von der mit dem physischen Anschluss verknüpften Vorrichtung zur Sicherung der Weiterleitung empfangen wird, und eine Neuinitialisierung der komplexen elektronischen Komponente ist, wenn eine vorbestimmte Anzahl von Rahmen während einer vorbestimmten Dauer nicht empfangen wird, und die zweite Operation eine Bearbeitung des Wartungsrahmens und eine Unterdrückung des Wartungsrahmens ist, der von der mit dem physischen Anschluss verknüpften Vorrichtung zur Sicherung der Weiterleitung empfangen wird.

8. Verfahren nach einem der Ansprüche 1 bis 7, **dadurch gekennzeichnet, dass** die komplexe elektronische Komponente und jede mit dem physischen Anschluss verknüpfte Vorrichtung zur Sicherung der Weiterleitung in einem Flugzeug umfasst sind.

9. Verfahren nach Anspruch 8, **dadurch gekennzeichnet, dass** das Flugzeug verschiedene gesicherte Bereiche umfasst.

10. Verfahren nach einem der Ansprüche 1 bis 9, **dadurch gekennzeichnet, dass** die Signaturen anhand einer Typen- oder exklusiven Funktion oder einer Hash-Funktion anhand eines Codierschlüssels erhalten werden, der ausschließlich zwischen dem Softwaremodul und jeder Vorrichtung zur Sicherung der Weiterleitung geteilt wird.

11. System zur Steuerung des Betriebs einer komplexen elektronischen Komponente, die Datenrahmen zu physischen Anschlüssen überträgt, wobei jeder Datenrahmen mindestens eine Quelladresse umfasst, **dadurch gekennzeichnet, dass** das System umfasst:
- Mittel zur Einfügung einer ersten Signatur, die mindestens anhand der im Datenrahmen enthaltenen Quelladresse und einer Kennung des physischen Anschlusses bestimmt wird, durch den der Datenrahmen durch die komplexe elektronische Komponente übertragen wird, in jeden Datenrahmen, der durch die komplexe elektronische Komponente übertragen werden soll, durch ein in der komplexen elektronischen Komponente enthaltenes Softwaremodul,
- Mittel zur Übertragung des Datenrahmens, in den die Signatur eingefügt wurde, die in der komplexen elektronischen Komponente umfasst sind,
- Mittel zum Empfang des Datenrahmens, in den die Signatur eingefügt wurde, durch eine mit dem physischen Anschluss verknüpfte Vorrichtung zur Sicherung der Weiterleitung,
- Mittel zur Bestimmung einer zweiten Signatur, die in der mit dem physischen Anschluss verknüpften Vorrichtung zur Sicherung der Weiterleitung umfasst sind, anhand der Kennung des physischen Anschlusses und der Quelladresse,
- Mittel zum Vergleich der Signaturen, die in der mit dem physischen Anschluss verknüpften Vorrichtung zur Sicherung der Weiterleitung umfasst sind,
- Mittel zur Ausführung einer ersten Operation, wenn die erste und die zweite Signatur verschieden sind, oder einer zweiten Operation, wenn die erste und die zweite Signatur identisch sind, die in der mit dem physischen Anschluss verknüpften Vorrichtung zur Sicherung der Weiterleitung umfasst sind.

## Claims

1. Method for controlling the operation of a complex electronic component (10) transferring data frames to physical ports, each data frame comprising at least a source address, **characterized in that** the method comprises the steps of:
- a software module (15) included in the complex electronic component inserting, into each data frame to be transferred by the complex electronic component, a first signature determined at least on the basis of the source address included in the data frame and an identifier of the physical port through which the data frame is transferred by the complex electronic component,
- the complex electronic component (10) transferring the data frame into which the signature was inserted,
- a device for securing the routing (25a, 25b, 25c, 25d) associated with the physical port (porta, Portb, Portc, Portd) receiving the data frame into which the signature was inserted,
- the device for securing the routing (25a, 25b, 25c, 25d) associated with the physical port (porta, Portb, Portc, Portd) determining a second signature on the basis of the identifier of the physical port and the source address,
- the device for securing the routing (25a, 25b, 25c, 25d) associated with the physical port (porta, Portb, Portc, Portd) comparing the signatures,
- the device for securing the routing (25a, 25b, 25c, 25d) associated with the physical port (porta, Portb, Portc, Portd) executing a first operation if the first and second signatures are different or a second operation if the first and second signatures are identical.

2. Method according to Claim 1, **characterized in that** the first operation is to delete the data frame received by the device for securing the routing associated with the physical port and the second operation is to delete the first signature in the data frame in order to transfer the data frame to a destination address included in the data frame.

3. Method according to Claim 2, **characterized in that** the method furthermore comprises a step of counting the deleted data frames.

4. Method according to Claim 2 or 3, **characterized in that** the signatures are furthermore determined on the basis of the destination address.

5. Method according to any one of Claims 2 to 4, **characterized in that** the signatures are furthermore determined on the basis of all or some of the data included in the data frame.

6. Method according to any one of Claims 2 to 5, **characterized in that** the signatures are furthermore determined on the basis of the amount of data included in the data frame.

7. Method according to Claim 1, **characterized in that** the data frames are periodically transferred predetermined service frames and **in that** the first operation is at least not to process the service frame and to delete the service frame received by the device for securing the routing associated with the port and to reinitialize the complex electronic component if a predetermined number of frames is not received during a predetermined period and the second operation is to process the service frame and to delete the service frame received by the device for securing the routing associated with the port.

8. Method according to any one of Claims 1 to 7, **characterized in that** the complex electronic component and each device for securing the routing associated with a physical port are included in an aircraft.

9. Method according to Claim 8, **characterized in that** the aircraft comprises various secure areas.

10. Method according to any one of Claims 1 to 9, **characterized in that** the signatures are obtained on the basis of a function of exclusive or type or a hash function on the basis of a coding key shared only between the software module and each device for securing the routing.

11. System for controlling the operation of a complex electronic component transferring data frames to physical ports, each data frame comprising at least a source address, **characterized in that** the system comprises:
- means for a software module included in the complex electronic component to insert, into each data frame to be transferred by the complex electronic component, a first signature determined at least on the basis of the source address included in the data frame and an identifier of the physical port through which the data frame is transferred by the complex electronic component,
- means, included in the complex electronic component, for transferring the data frame into which the signature was inserted,
- means for a device for securing the routing associated with the physical port to receive the data frame into which the signature was inserted,
- means, included in the device for securing the routing associated with the physical port, for determining a second signature on the basis of the identifier of the physical port and the source address,
- means, included in the device for securing the routing associated with the physical port, for comparing the signatures,
- means, included in the device for securing the routing associated with the physical port, for executing a first operation if the first and second signatures are different or a second operation if the first and second signatures are identical.
